(19) Europäisches Patentamt / European Patent Office / Office européen des brevets

(11) **EP 2 051 369 A2**

(12) **DEMANDE DE BREVET EUROPEEN**

(43) Date de publication:
**22.04.2009 Bulletin 2009/17**

(21) Numéro de dépôt: **08166822.0**

(22) Date de dépôt: **16.10.2008**

(51) Int Cl.:
*H02P 23/14* (2006.01)          *E05F 15/10* (2006.01)
*E06B 9/68* (2006.01)

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **16.10.2007  FR 0707235**

(71) Demandeur: **Somfy SAS**
**74300 Cluses (FR)**

(72) Inventeurs:
• **Grehant, Bernard**
  **74300 Nancy-sur-Cluses (FR)**
• **Tranchand, Alain**
  **74330 La Balme de Sillingy (FR)**

(74) Mandataire: **Bugnion Genève**
**Bugnion SA**
**10, route de Florissant**
**Case Postale 375**
**1211 Genève 12 (CH)**

(54) **Procédé de détermination d'une grandeur interne d'un actionneur de manoeuvre d'un élément mobile domotique**

(57)      Procédé de détermination d'une grandeur interne d'un actionneur (1) de manoeuvre d'un élément mobile (52), muni d'un moteur électrique (MOT) et comprenant un frein (BRK) exerçant un couple résistant sur le moteur lorsque l'actionneur fonctionne à vide, **caractérisé en ce qu'**il comprend :
- au moins deux étapes de manoeuvre de l'élément mobile dans deux sens opposés et deux étapes de mesure d'une première valeur et d'une deuxième valeur d'un paramètre de fonctionnement de l'actionneur, une dans chacun des sens de manoeuvre,
- une étape de détermination ou d'approximation d'une troisième valeur de ce paramètre de fonctionnement lorsque l'actionneur fonctionne à vide, déduite des première et deuxième valeurs et
- une étape de détermination de la grandeur interne à partir de la troisième valeur.

Printed by Jouve, 75001 PARIS (FR)

**Description**

L'invention concerne un actionneur comprenant un moteur électrique utilisé pour manoeuvrer un élément mobile de fermeture, d'occultation, de protection solaire ou d'écran dans un bâtiment.

Certains actionneurs destinés à être installés dans les bâtiments et destinés à la manoeuvre d'éléments de fermeture, d'occultation, de protection solaire ou d'écran (tels que par exemple des volets roulants, des portes, des portails ou des stores) comprennent un moteur à induction (ou moteur asynchrone) monophasé à condensateur permanent. L'invention est également applicable à des actionneurs comportant un moteur à induction de type triphasé, ou encore à des actionneurs comportant un moteur à courant continu à collecteur ou sans balais.

Un réducteur est associé au moteur dans l'actionneur. Ce réducteur est partiellement irréversible ; c'est-à-dire qu'il a un rendement différent selon que c'est l'arbre d'entrée qui entraîne l'arbre de sortie ou que c'est l'arbre de sortie qui entraîne l'arbre d'entrée, le rendement étant en général inférieur lorsque c'est l'arbre de sortie qui entraîne l'arbre d'entrée.

Ces actionneurs sont alimentés par le réseau alternatif, par exemple 230 V 50 Hz, ou par une source continue.

Ils sont munis d'un frein d'immobilisation assurant le blocage de l'actionneur quand le moteur n'est pas alimenté. Le rôle du frein est essentiel, notamment en matière de sécurité. Il doit être activé par défaut, et s'opposer au couple d'entraînement provoqué par la gravité sur l'élément mobile, ce couple pouvant lui-même varier selon la position de l'élément mobile, notamment si celui-ci est enroulable, par exemple un volet roulant.

Le moteur placé dans l'actionneur est soumis à un échauffement quasi adiabatique, du fait du carter cylindrique de l'actionneur (de plus en plus souvent en matière plastique) ou du fait du tube d'enroulement entraîné en rotation par l'actionneur et entourant ce dernier : ces différentes parois, auxquelles s'ajoutent le produit mobile enroulé et le caisson logeant l'ensemble, limitent les échanges avec l'air ambiant.

Cet échauffement pouvant prendre de très fortes valeurs, il est important de pouvoir mesurer la température du moteur et/ou la température du frein afin de garantir la sécurité contre les risques d'incendie ou de glissement du frein. Cette connaissance permet également d'optimiser les conditions d'alimentation du moteur, d'agir sur les durées de commande et/ou sur la puissance d'alimentation. Cette connaissance permet enfin de déterminer combien les caractéristiques de freinage sont modifiées et d'adapter en conséquence des algorithmes de détection d'obstacle basés sur l'observation du couple ou de la vitesse du moteur.

Cependant, l'installation d'une thermistance sur une carte électronique d'alimentation du moteur ne donne pas une image suffisamment fidèle de la température vue par les organes électro-mécaniques, la carte électronique étant en général située dans une enveloppe isolante pour des questions normatives. Le fait d'avoir une liaison filaire entre la thermistance et la carte est considéré comme une source de défauts et/ou de surcoût.

Dans la demande de brevet EP 1 655 817, on détermine une grandeur image de la température, à l'aide d'un composant subissant un échauffement similaire à celui du moteur. Ceci trouve une application dans le cas du transformateur alimentant un moteur à courant continu, mais pas dans le cas d'un moteur à induction, directement branché sur le secteur.

Il est également connu de mesurer la résistance d'induit d'un moteur à courant continu (et donc d'en déduire sa température) à partir de la connaissance de l'amplitude de la tension et d'un artifice permettant de faire apparaître la force contre électromotrice (« back e.m.f. ») du moteur, comme par exemple expliqué dans le brevet US 3,621,655. Le problème posé par ce type de mesures est qu'elles sont très affectées par la résistance de contact entre induit et balais.

On connaît du document FR 2 888 057 un procédé de détermination de température comprenant une phase d'alimentation du moteur, une phase de mesure d'une grandeur électrique et une phase de détermination de la température.

La demande de brevet WO 2007/004002 prévoit une mesure indirecte de la résistance stator d'un moteur à induction, nécessitant de pouvoir établir, par exemple à l'aide d'un triac, un régime transitoire de charge et décharge du condensateur de déphasage du moteur. La maîtrise du régime transitoire et la mesure se révèlent délicates.

L'invention prévoit de remédier à ces inconvénients. Elle s'applique aux actionneurs munis de freins de type à Hystérésis magnétique (comme décrit dans le brevet EP 1 070 827) ou aux freins de type différentiel (comme décrit dans les demandes de brevet EP 1 582 681 et EP 1 561 897), ou à tout type de frein exerçant un couple résistant sur le moteur lorsque l'actionneur est alimenté sans charge (fonctionnement à vide). Préférentiellement, l'invention s'applique au cas où la charge vue par l'actionneur est affectée par la gravitation.

De la même façon, l'invention permet la détermination de l'usure du frein ou d'autres éléments équipant l'actionneur.

Le but de l'invention est de fournir un procédé d'analyse d'une grandeur interne telle la température de l'actionneur et/ou l'état d'usure d'un frein améliorant les procédés d'analyse connus de l'art antérieur. L'invention propose en outre un procédé de fonctionnement d'un actionneur mettant en oeuvre un tel procédé d'analyse. L'invention propose également un procédé d'apprentissage d'un actionneur mettant en oeuvre un tel procédé d'analyse, et un actionneur mettant en oeuvre l'un des procédés.

Le procédé selon l'invention est défini par la revendication 1.

Différents modes d'exécution du procédé selon l'invention sont définis par les revendications dépendantes 2 à 9.

Selon l'invention, un procédé de fonctionnement est défini par la revendication 10.

Selon l'invention, un actionneur électromécanique est défini par la revendication 11.

Un mode de réalisation de l'actionneur selon l'invention est défini par la revendication 12.

Le dessin annexé représente, à titre d'exemple, un mode de réalisation d'un procédé d'analyse selon l'invention et un dispositif d'actionneur permettant de mettre en oeuvre un tel procédé d'analyse.

La figure 1 est un schéma d'un mode de réalisation d'un actionneur permettant l'exécution d'un procédé d'analyse selon l'invention.

La figure 2 est un schéma représentant l'évolution de différents couples dans un actionneur en fonction du couple en entrée du réducteur de cet actionneur.

La figure 3 est un ordinogramme d'un procédé de fonctionnement d'un actionneur selon l'invention.

La figure 4 est un schéma de principe de détermination d'une donnée utilisée dans le procédé d'analyse selon l'invention.

La figure 5 illustre un procédé de détermination d'usure du frein selon l'invention.

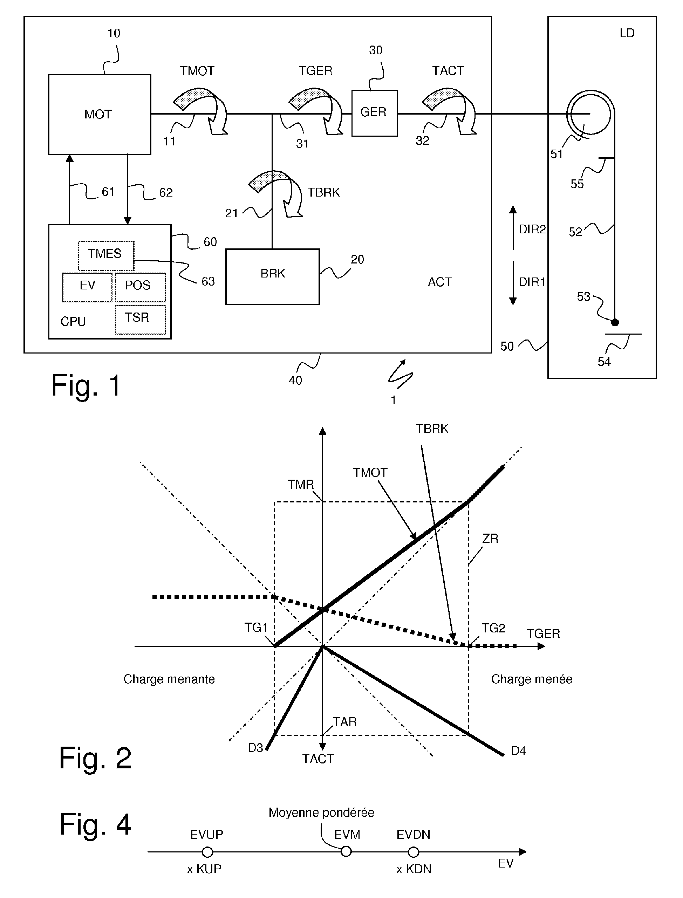

La figure 1 représente schématiquement une installation 1 comprenant un actionneur selon l'invention.

L'actionneur 40 est désigné par ACT. Il comprend un moteur 10 désigné par MOT, raccordé mécaniquement à un frein différentiel 20 désigné par BRK et à un réducteur 30 désigné par GER.

L'arbre de sortie du réducteur GER constitue la sortie mécanique de l'actionneur et entraîne un élément mobile dans un équipement 50, désigné par LD. Dans l'installation de la figure 1, cet élément mobile est enroulable sur un tube 51 entraîné en rotation par la sortie mécanique 32 de l'actionneur et comprend un tablier 52 dont une première extrémité est attachée au tube tandis qu'une deuxième extrémité 53 est lestée et guidée par des glissières non représentées.

Un premier sens de rotation du moteur provoque le mouvement vertical du tablier dans la première direction DIR1 : la charge est principalement « menante » relativement à l'actionneur. Un deuxième sens de rotation du moteur provoque le mouvement vertical du tablier dans la deuxième direction DIR2 : la charge est alors « menée » relativement à l'actionneur.

Le mouvement en charge menante peut être interrompu par l'arrivée sur une première butée mécanique 54. Le mouvement en charge menée peut être interrompu par l'arrivée sur une deuxième butée mécanique 55.

En prenant une convention de définitions en « charge menée », on désigne par TMOT le couple fourni par le moteur sur l'arbre de sortie moteur 11, on désigne par TBRK le couple de freinage exercé par le frein en opposition au couple moteur, ce couple étant mesuré sur un plateau tournant 21 mobile en rotation, on désigne par TGER le couple fourni sur l'arbre d'entrée réducteur 31, ce couple résultant des actions antagonistes du moteur et du frein, et on désigne par TACT le couple fourni sur l'arbre de sortie réducteur 32, qui constitue le couple d'entraînement de la charge LD.

L'actionneur ACT comprend également dans un bloc de commande 60, désigné par CPU, des moyens de réception d'ordres de mouvement, des moyens de commande agissant sur l'alimentation 61 du moteur. Les paramètres électriques du moteur 62 sont transmis à des moyens d'estimation ou de mesure de couple 63, référencés TMES, permettant d'analyser le couple moteur ou des variations de couple moteur et d'agir sur la commande du moteur. Alternativement, les moyens de mesure analysent la vitesse moteur ou des variations de vitesse moteur. Le bloc de commande comprend notamment des moyens logiciels pour analyser la température de l'actionneur. Il comprend notamment des moyens logiciels pour permettre un fonctionnement de l'actionneur selon les procédés objets de l'invention. Les moyens logiciels peuvent comprendre des programmes informatiques. En particulier, l'actionneur électromécanique comprend un moyen de réalisation de deux étapes de manoeuvre de l'élément mobile dans deux sens opposés, un moyen de mesure pour réaliser deux étapes de mesure d'une première valeur et d'une deuxième valeur d'un paramètre de fonctionnement de l'actionneur (une dans chacun des sens de manoeuvre), un moyen de détermination ou d'approximation d'une troisième valeur de ce paramètre de fonctionnement lorsque l'actionneur fonctionne à vide (cette valeur étant déduite des première et deuxième valeurs) et un moyen de détermination d'une grandeur interne à partir de la troisième valeur.

Le bloc de commande CPU contient également un capteur de température TSR. L'usage de ce capteur apparaîtra dans la description du procédé de détermination d'usure du frein.

Les deux quadrants supérieurs de la figure 2 représentent, avec une même échelle, le couple moteur TMOT et le couple exercé par le frein TBRK en fonction du couple fourni sur l'arbre d'entrée réducteur TGER. Cette figure correspond à un dimensionnement optimisé, permettant d'avoir une pente aussi élevée que possible (quand on ne tient pas compte des marges de sécurité) pour le couple moteur dans la zone de fonctionnement normal ZR de l'actionneur, délimitée par un rectangle en trait pointillé.

Le quadrant de droite correspond au fonctionnement en charge menée, tandis que le quadrant de gauche correspond au fonctionnement en charge menante.

Sur les quadrants inférieurs de la figure 2 sont également représentées les caractéristiques de couple de l'actionneur en fonction du couple réducteur, avec une même échelle (incluant le rapport de réduction). On a pris 0.65 et 0.55 comme valeurs respectives du rendement direct du réducteur EGERd et du rendement inverse du réducteur EGERi.

La droite D3, en trait gras, traduit donc la relation :

$$TGER = EGERi \times TACT ,$$

lorsque la charge entraîne le réducteur, tandis que la droite D4, en trait gras, traduit la relation :

$$TACT = EGERd \times TGER ,$$

lorsque le réducteur entraîne la charge.

La spécification de l'actionneur apparaît de manière simple sur la figure : on reporte d'abord le couple nominal de l'actionneur TAR et on en déduit, à partir des intersections avec les droites D3 et D4 les valeurs du couple réducteur nominal en charge menée TG2 ou menante TG1, ainsi que la valeur nominale TMR du couple moteur en charge menée. La zone de fonctionnement normal ZR s'inscrit dans le rectangle défini par ces valeurs.

Il est clair qu'une même variation de couple de sortie de l'actionneur est vue par l'entrée du réducteur :

- multipliée par le rendement inverse EGERi, en situation de charge menante,
- divisée par le rendement direct EGERd, en situation de charge menée,

et donc provoque deux valeurs respectives de variation de couple moteur qui sont elles-mêmes dans un rapport égal au produit EGERd x EGERi, (dans notre exemple égal à 0.65 x 0.55 = 0.36) dans le cas d'un frein désactivé par le flux magnétique stator ou d'un électro-frein. Dans le cas d'un frein différentiel, on se rapproche d'autant plus de cette valeur que le couple TG2 est petit devant le couple TG1.

Pour une même variation du couple de sortie de l'actionneur, le moteur voit donc des variations de couple (ou de vitesse) presque trois fois plus faibles en charge menante qu'en charge menée.

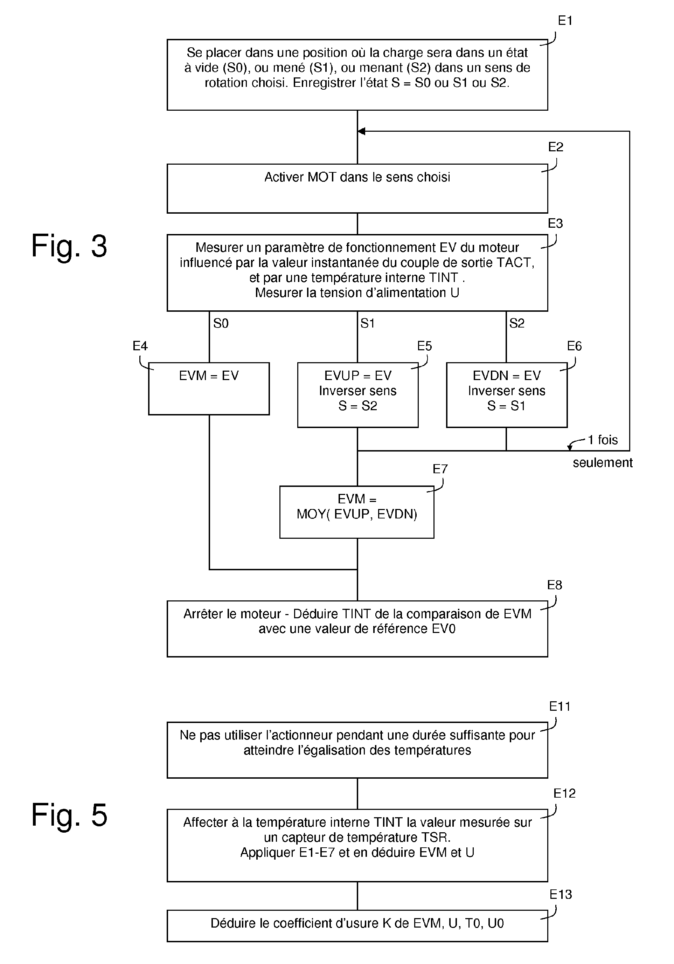

La figure 3 représente le procédé de détermination de température selon l'invention.

Dans une première étape E1, on se place dans une position particulière où la charge sera soit à vide (état S0), soit menée (état S1), soit menante (état S2) quand le moteur sera activé dans un premier sens de rotation choisi. Comme il sera vu par la suite, la position particulière peut-être choisie par exemple au voisinage de position de fins de course, ou préférentiellement là où la charge est la plus grande. On enregistre l'état S de la charge comme étant égal à S0, à S1 ou à S2.

Dans une deuxième étape E2, on active le moteur dans le sens choisi.

Dans une troisième étape E3, on mesure un paramètre de fonctionnement EV variable, influencé par la valeur instantanée du couple de sortie de l'actionneur TACT. Ce paramètre de fonctionnement EV est le couple du moteur ou préférentiellement une grandeur proportionnelle au couple moteur (par exemple l'intensité du courant statorique s'il s'agit d'un moteur à courant continu) ou une grandeur variant de manière connue avec le couple moteur (par exemple la tension aux bornes du condensateur de déphasage s'il s'agit d'un moteur à induction monophasé).

Dans le cas d'un moteur à commutation électronique ou « brushless DC» (BLDC), le paramètre de fonctionnement est par exemple l'intensité du courant absorbé par le circuit d'alimentation du moteur.

Alternativement, le paramètre de fonctionnement EV est la vitesse du rotor du moteur.

Dans tous les cas, le paramètre de fonctionnement EV est transmis au bloc de commande CPU sous forme de paramètres électriques 62.

Le paramètre de fonctionnement EV est influencé par une grandeur interne de l'actionneur, par exemple sa température interne TINT. Par exemple, dans le cas d'un frein de type différentiel, la température du frein agit sur le coefficient de friction des garnitures et diminue le couple résistant opposé au moteur lorsque l'actionneur fonctionne à vide. Dans le cas d'un frein de type à hystérésis magnétique, la température agit sur le champ des aimants et diminue le freinage magnétique. Inversement, si on utilise une garniture pouvant supporter des températures beaucoup plus élevées que les températures normales de l'actionneur, par exemple des garnitures en « ferrodo » (marque déposée), alors le paramètre de fonctionnement est principalement influencé par la température du moteur lui-même.

Comme on le verra par la suite, le paramètre de fonctionnement est aussi influencé par l'usure d'éléments mécaniques et par la tension d'alimentation du moteur. On mesure la tension d'alimentation U lors de cette troisième étape.

Selon que l'état enregistré S est l'état à vide S0, l'état en charge menée S1 ou l'état en charge menante S2, on quitte la troisième étape pour appliquer respectivement une quatrième étape E4, une cinquième étape E5 ou une sixième étape E6.

Si la charge est à vide, alors le procédé passe à la quatrième étape E4 dans laquelle on mémorise dans une première mémoire EVM la valeur mesurée du paramètre de fonctionnement EV, avant de passer à une huitième étape E8.

Si la charge est menée, alors le procédé passe à la cinquième étape E5, dans laquelle on mémorise dans une deuxième mémoire EVUP la valeur mesurée du paramètre de fonctionnement EV. On inverse le sens de rotation choisi, on enregistre l'état menant S2 comme nouvel état S et on retourne à la deuxième étape E2.

Si la charge est menante, alors le procédé passe à la sixième étape E6, dans laquelle on mémorise dans une troisième mémoire EVDN la valeur mesurée du paramètre de fonctionnement EV. On inverse le sens de rotation choisi, on enregistre l'état mené S1 comme nouvel état S et on retourne à la deuxième étape E2.

Cependant, le retour à la deuxième étape n'a lieu qu'une seule fois, ceci afin de provoquer un seul mouvement d'aller-retour du produit mobile, étant entendu que la charge n'étant pas à vide, elle est menante dans un sens et menée dans l'autre. Quand le retour à la deuxième étape a déjà été réalisé une fois, alors le procédé quitte la cinquième étape E5 ou la sixième étape E6 pour une septième étape E7 dans laquelle on calcule une moyenne pondérée (comme expliqué plus loin) des valeurs enregistrées dans la deuxième mémoire EVUP et la troisième mémoire EVDN, résultat affecté à la première mémoire EVM, et on passe à la huitième étape E8.

Dans la huitième étape E8, on compare la première mémoire EVM à une valeur de référence EVO enregistrée dans une quatrième mémoire, et on en déduit la valeur de la température interne TINT. Par comparaison, il faut entendre l'établissement d'un rapport des valeurs ou l'une des méthodes décrites plus bas.

L'écart ou le rapport entre la valeur de référence EVO et la valeur du paramètre de fonctionnement EV dépend notamment de la température interne à l'actionneur TINT (par exemple la température du frein, ou encore la température du moteur), de la tension d'alimentation U comparée à une référence de tension U0, etc.

On prend l'approximation linéaire suivante :

$$EV = EV0 \times F1(TINT/T0) \times F2\,(U/U0) \quad (1)$$

F1 et F2 étant des fonctions analytiques ou tabulées, déduites d'essais.

De manière pratique, le processus s'étale sur un bref intervalle de temps, provoquant un très faible déplacement ou un faible aller-retour de l'élément mobile. Préférentiellement, les valeurs mémorisées ne correspondent pas à un seul échantillonnage mais à une moyenne temporelle établie lors de chaque mouvement.

Ainsi, soit de manière directe quand l'actionneur est à vide, soit préférentiellement par un aller-retour quand l'actionneur est mené par la charge ou mène la charge, on détermine la valeur du paramètre de fonctionnement EV correspondant à un essai à vide pour une valeur actuelle de la température interne TINT de l'actionneur.

De manière idéale, un essai à vide réalisé à une température connue T0 suffit à enregistrer dans une mémoire de l'actionneur la valeur de référence EVO. Ceci peut être effectué automatiquement lors du cycle de fabrication de l'actionneur.

La position de départ lors de la première étape E1 peut permettre d'obtenir un état suffisamment proche de l'état à vide vrai pour lui être assimilé. Par exemple, pour la plupart des éléments mobiles, l'effort à fournir est très faible au voisinage de la position haute. Un mouvement vers le bas est alors assimilable à un mouvement à vide, pourvu qu'on ne commence les mesures qu'après une durée suffisante pour rendre négligeable l'effet d'inertie. Dans ce cas, le procédé sera utilisé en parcourant simplement la branche marquée S0. Cependant, le comportement de l'élément mobile au voisinage d'une position haute est souvent mal défini, et les frottements prennent donc une importance relative qui fausse la mesure.

Alternativement, on profite d'un jeu existant (par exemple lors du dépilement de lames ajourées) (voire créer un jeu volontaire) en position basse FCB et à mesurer le paramètre de fonctionnement EV en début de montée : lors du rattrapage de jeu, la charge est nulle ou presque.

De manière préférée, la position de départ est intermédiaire : le fait de prendre la moyenne du bref mouvement d'aller-retour permet d'obtenir une valeur proche de ce que serait le paramètre de fonctionnement dans un véritable essai à vide. On obtient une précision meilleure encore en pondérant les mesures EVUP et EVDN par les rendements dans le cas où le paramètre de fonctionnement est au moins sensiblement proportionnel au couple.

La figure 4 donne un exemple de détermination du paramètre de fonctionnement EVM correspondant à un essai à vide lorsqu'un bref mouvement d'aller-retour est effectué à partir d'une position intermédiaire. Dans le mouvement de descente, en charge menante, on mesure un paramètre de fonctionnement (par exemple la vitesse du rotor) égale à EVDN. Dans le mouvement de montée, en charge menée, on mesure un paramètre de fonctionnement égale à EVUP. Or tout se passe comme si la charge avait varié dans le rapport du produit des rendements (par exemple d'un facteur 3). Si on affecte à la mesure EVUP un premier coefficient de pondération KUP égal à 1, alors on affecte à la mesure EVDN un deuxième coefficient de pondération KDN égal à l'inverse du produit EGERd x EGERi, et la valeur du paramètre de fonctionnement EVM qui correspondrait à un essai à vide est la moyenne des mesures pondérées.

De manière préférée, le mouvement d'aller-retour est provoqué dans une position où le couple a été identifié comme maximum. Ainsi, l'influence relative des frottements est réduite lors de la mesure. Si le mouvement d'aller-retour est suffisamment bref, il peut être provoqué pendant l'exécution d'un ordre de fermeture complète ou d'ouverture complète de l'écran mobile.

Alternativement, le mouvement en charge menante peut être activé dans une première position sur la trajectoire, alors que le mouvement en charge menée est activé dans une deuxième position sur la trajectoire, si la distance entre les deux positions n'est pas susceptible de provoquer un échauffement notable de l'actionneur.

Le procédé selon l'invention utilise donc préférentiellement le parcours des branches S1 et S2, qui pourra être utilisé dans tous les cas d'application à une charge soumise à la pesanteur. Cependant, comme il a été mentionné, le parcours de la branche S0 est possible dans certains cas d'application. On préférera alors utiliser conjointement d'une part le parcours des branches S1 et S2, et d'autre part le parcours de la branche S0, afin de comparer les résultats pour confirmation ou inversement pour mettre en évidence un problème mécanique dans le produit mobile en cas de différence sensible.

Le procédé peut aussi n'être appliqué qu'après plusieurs minutes de fonctionnement après un temps de repos long, sachant qu'aucun échauffement significatif n'est à craindre dans les premières minutes de fonctionnement. Ainsi, le mouvement d'aller-retour pour mesure de température n'apparaît jamais en fonctionnement normal, mais uniquement après un usage intensif de l'actionneur dû aux procédures de première installation ou dû par exemple à un usage ludique par un enfant. Dans ces deux cas, le bref aller-retour en position voisine de la demi-course présente l'avantage d'un signal à l'utilisateur.

L'invention permet également la détermination d'une deuxième grandeur interne, caractéristique de l'usure du frein.

L'écart ou le rapport entre la valeur de référence EVO et la valeur du paramètre de fonctionnement EV dépend également de l'usure des garnitures, du vieillissement du ressort agissant sur le plateau, du vieillissement du réducteur....

On complète alors l'approximation linéaire précédente :

$$EV = EV0 \times F1(TINT/T0) \times F2 (U/U0) \times K. \quad (2)$$

Le coefficient K est un coefficient d'usure composite, intégrant par exemple l'usure du ressort, et celle de la garniture du frein. Cette usure n'est à prendre en considération que sur le long terme.

Pour une valeur donnée de l'usure, il est possible de disposer d'une table de conversion, établie pour une valeur standard de température de référence T0 et pour une valeur standard de tension de référence U0, qui, pour tout couple (EV, U) du paramètre de fonctionnement mesurée EV et de la tension actuelle U, donne la valeur de la température interne TINT, ou d'une variable représentative de la température interne.

Si on utilise le capteur de température TSR du bloc de commande CPU, alors l'invention permet aussi la détermination de l'usure du frein.

En effet, lors d'une activation du moteur suivant une longue période de repos, la température du bloc de commande mesurée par le capteur TSR est nécessairement égale à la température interne TINT.

L'application de l'équation (2) permet de déduire la valeur du coefficient d'usure K. Ce procédé est représenté à la figure 5.

Dans une première étape E11, on s'assure que la période de non-alimentation de l'actionneur a été suffisante pour qu'une égalisation des températures ait pu se produire au sein de celui-ci.

Dans une deuxième étape E12, on affecte à la température interne TINT la valeur mesurée sur le capteur de température TSR, puis on applique les étapes E1 à E7 du procédé d'analyse. Au cours de ces étapes, on mesure la tension d'alimentation U de l'actionneur et on a placé dans la première mémoire EVM la valeur du paramètre de fonctionnement EV correspondant à un fonctionnement à vide de l'actionneur.

Dans une troisième étape E13, on déduit le coefficient d'usure K, à l'aide de tables préenregistrées ou à l'aide de l'équation (1), puisque toutes les grandeurs EVM, EVO, U, U0, TINT et T0 sont connues.

Préférentiellement, l'usage du procédé pour déterminer l'usure de l'actionneur a lieu à l'occasion d'un « cycle de maintenance automatique » permettant par exemple de recaler des positions de fin de course.

Dans tous les cas, le fait de procéder à plusieurs brefs aller-retours régulièrement espacés sur la trajectoire présente l'avantage de permettre une moyenne des résultats et de montrer clairement à l'utilisateur qu'il s'agit d'un cycle automatique et non de la présence d'un défaut dans le guidage de l'élément mobile.

**Revendications**

1. Procédé de détermination d'une grandeur interne d'un actionneur (1) de manoeuvre d'un élément mobile (52), muni d'un moteur électrique (MOT) et comprenant un frein (BRK) exerçant un couple résistant sur le moteur lorsque l'actionneur fonctionne à vide, **caractérisé en ce qu'**il comprend :

   - au moins deux étapes de manoeuvre de l'élément mobile dans deux sens opposés et deux étapes de mesure d'une première valeur et d'une deuxième valeur d'un paramètre de fonctionnement de l'actionneur, une dans chacun des sens de manoeuvre,
   - une étape de détermination ou d'approximation d'une troisième valeur de ce paramètre de fonctionnement lorsque l'actionneur fonctionne à vide, déduite des première et deuxième valeurs et
   - une étape de détermination de la grandeur interne à partir de la troisième valeur.

2. Procédé de détermination selon la revendication 1, **caractérisé en ce qu'**il comprend une étape préliminaire de détermination d'au moins une quatrième valeur du paramètre de fonctionnement lorsque l'actionneur fonctionne à vide et à température connue.

3. Procédé de détermination selon la revendication 2, **caractérisé en ce que** l'étape d'utilisation de la première valeur comprend l'utilisation de la quatrième valeur du paramètre de fonctionnement.

4. Procédé de détermination selon l'une des revendications précédentes, **caractérisé en ce que** l'étape d'établissement d'une mesure d'un paramètre de fonctionnement de l'actionneur a lieu à partir d'une position de l'élément mobile dans laquelle le couple exercé par l'élément mobile sur l'actionneur est sensiblement maximum.

5. Procédé de détermination selon l'une des revendications précédentes, **caractérisé en ce que** l'étape de détermination ou d'approximation de la quatrième valeur du paramètre de fonctionnement lorsque l'actionneur fonctionne à vide comprend une opération de calcul d'une moyenne des deuxième et troisième valeurs du paramètre de fonctionnement.

6. Procédé de détermination selon la revendication 5, **caractérisé en ce que** la moyenne est pondérée, le rapport des coefficients de pondération étant égal au produit des rendements direct et inverse du réducteur.

7. Procédé de détermination selon l'une des revendications précédentes, **caractérisé en ce que** le paramètre de fonctionnement est la vitesse de rotation du moteur ou le courant d'alimentation du moteur ou, dans le cas d'un moteur à induction, la tension du condensateur de déphasage du moteur.

8. Procédé de détermination selon l'une des revendications précédentes, **caractérisé en ce que** la grandeur interne est une température interne de l'actionneur et/ou une grandeur représentative d'une usure de l'actionneur.

9. Procédé de détermination selon la revendication précédente, **caractérisé en ce que** l'étape d'établissement d'une mesure d'un paramètre de fonctionnement de l'actionneur et l'étape d'établissement d'une mesure de la température interne de l'actionneur sont mises en oeuvre alors que les températures à l'intérieur de l'actionneur sont uniformes.

10. Procédé de fonctionnement d'un actionneur de manoeuvre d'un élément mobile, **caractérisé en ce qu'**il comprend une phase de détermination de la grandeur interne d'un actionneur selon l'une des revendications 1 à 9 et une étape de mise en oeuvre d'une logique de détermination des fins de course ou d'un obstacle dont l'algorithme est modifié en fonction de la grandeur interne.

11. Actionneur électromécanique (1) pour la manoeuvre d'un élément mobile (52) comprenant des moyens matériels (60, 63) et logiciels de mise en oeuvre d'un procédé selon l'une des revendications précédentes.

12. Actionneur selon la revendication 11, **caractérisé en ce que** les moyens matériels et logiciels comprennent :

   - un moyen de réalisation de deux étapes de manoeuvre de l'élément mobile dans deux sens opposés,
   - un moyen de mesure pour réaliser deux étapes de mesure d'une première valeur et d'une deuxième valeur d'un paramètre de fonctionnement de l'actionneur,
   - un moyen de détermination ou d'approximation d'une troisième valeur de ce paramètre de fonctionnement lorsque l'actionneur fonctionne à vide et

- un moyen de détermination d'une grandeur interne à partir de la troisième valeur.

Fig. 1

Fig. 2

Fig. 4

E1

Se placer dans une position où la charge sera dans un état à vide (S0), ou mené (S1), ou menant (S2) dans un sens de rotation choisi. Enregistrer l'état S = S0 ou S1 ou S2.

**Fig. 3**

E2

Activer MOT dans le sens choisi

E3

Mesurer un paramètre de fonctionnement EV du moteur influencé par la valeur instantanée du couple de sortie TACT, et par une température interne TINT .
Mesurer la tension d'alimentation U

S0        S1        S2

E4

EVM = EV

E5

EVUP = EV
Inverser sens
S = S2

E6

EVDN = EV
Inverser sens
S = S1

1 fois
seulement

E7

EVM =
MOY( EVUP, EVDN)

E8

Arrêter le moteur - Déduire TINT de la comparaison de EVM avec une valeur de référence EV0

E11

Ne pas utiliser l'actionneur pendant une durée suffisante pour atteindre l'égalisation des températures

**Fig. 5**

E12

Affecter à la température interne TINT la valeur mesurée sur un capteur de température TSR.
Appliquer E1-E7 et en déduire EVM et U

E13

Déduire le coefficient d'usure K de EVM, U, T0, U0

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1655817 A
- US 3621655 A
- FR 2888057
- WO 2007004002 A
- EP 1070827 A
- EP 1582681 A
- EP 1561897 A